(19) Europäisches Patentamt
European Patent Office
Office européen des brevets

(11) **EP 3 219 662 B1**

(12) **EUROPÄISCHE PATENTSCHRIFT**

(45) Veröffentlichungstag und Bekanntmachung des Hinweises auf die Patenterteilung:
**15.04.2020 Patentblatt 2020/16**

(51) Int Cl.:
***B66C 23/90*** *(2006.01)*

(21) Anmeldenummer: **17156459.4**

(22) Anmeldetag: **16.02.2017**

(54) **VERFAHREN ZUM ERMITTELN DER TRAGFÄHIGKEIT EINES KRANS SOWIE KRAN**

METHOD FOR DETERMINING THE LOAD BEARING CAPACITY OF A CRANE AND CRANE

PROCÉDÉ DE DÉTERMINATION DE LA CAPACITÉ DE CHARGE D'UNE GRUE ET GRUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2016 DE 102016104358**

(43) Veröffentlichungstag der Anmeldung:
**20.09.2017 Patentblatt 2017/38**

(73) Patentinhaber: **Manitowoc Crane Group France SAS**
**69574 Dardilly Cedex (FR)**

(72) Erfinder:
• **EDELER, Dr. Christoph**
**26125 Oldenburg (DE)**

• **RICHTER, Frank**
**26386 Wilhelmshaven (DE)**
• **SCHNITTKER, Frank C.**
**97074 Würzburg (DE)**

(74) Vertreter: **SSM Sandmair**
**Patentanwälte Rechtsanwalt**
**Partnerschaft mbB**
**Joseph-Wild-Straße 20**
**81829 München (DE)**

(56) Entgegenhaltungen:
**EP-A1- 2 674 384      WO-A1-2015/162096**
**CN-A- 101 348 216      DE-A1- 2 820 353**
**DE-A1- 19 931 302**

**Beschreibung**

Die Erfindung betrifft ein Verfahren zum sicheren Ermitteln der Tragfähigkeit eines Krans und zur Überwachung der Sicherheit eines Krans sowie einen Kran, welcher diese Verfahren ausführen kann und z.B. eine variable Abstützbasis aufweisen kann. Weiterhin betrifft die Erfindung die Berechnung einer dreidimensionalen Arbeitskurve und die Ermittlung der zulässigen Geschwindigkeiten bei der Bewegung von Funktionselementen des Krans.

Die Tragfähigkeit eines Kranes setzt sich aus mehreren baugruppenbedingten Einzeltragfähigkeiten oder Grenzbelastungen verschiedener Kranbauteile oder Kranbaugruppen zusammen. Einige Grenzbelastungen lassen sich relativ einfach anhand weniger Parameter ermitteln oder sind für eine Anzahl von Zuständen konstant, andere Grenzbelastungen werden von einer Vielzahl von Parametern beeinflusst und lassen sich häufig nur schwer im Voraus ermitteln. Die einfach zu ermittelnden Grenzbelastungen oder Grenzkurven hängen häufig nur von einem einzigen Parameter ab und können zum Beispiel als zweidimensionale Grenzkurve vorab ermittelt und in einem Speicher abgelegt werden. Auf diesen Speicher kann bei Bedarf zugegriffen werden und für den jeweils aktuell oder konkret vorliegenden Parameter kann aus dem Speicher die zugeordnete vorab berechnete maximale Traglast ausgelesen werden.

Jedoch ist es bei einer größeren Anzahl von Kranbaugruppen, welche zum Teil unabhängig voneinander verschiedene Zustände annehmen oder konfiguriert werden können, problematisch, Grenzkurven oder allgemein baugruppenbedingte Belastungshöchstgrenzen für den Gesamtkran anzugeben, welcher auf eine Vielzahl von Arten konfiguriert werden kann. Hat eine erste Baugruppe beispielsweise n1 Konfigurationsmöglichkeiten, eine zweite Baugruppe n2 Konfigurationsmöglichkeiten und eine dritte Baugruppe n3 Konfigurationsmöglichkeiten, so ergeben sich insgesamt n1*n2*n3 Gesamtkonfigurationen des Kranes. Falls eine der Konfigurationsmöglichkeiten nicht als eine diskrete Anzahl unterschiedlicher Zustände sondern zum Beispiel stufenlos realisierbar ist, zum Beispiel durch die stufenlose Ausfahrbarkeit eines oder aller Stützträger, ergeben sich theoretisch unendlich viele Krankonfigurationen, wobei es dann unmöglich ist vorab für alle möglichen Kranzustände eine Gesamttragfähigkeit des Kranes für den jeweiligen konkreten Konfigurationszustand anzugeben. Selbst für die Stützträger-Baugruppe allein kann keine baugruppenbedingte Tragfähigkeit für alle möglichen Konfigurationen vorab bestimmt und gespeichert werden.

Zwar könnte für einzelne Kranbaugruppen ein Sicherheitsarbeitsbereich angegeben werden, welcher für bestimmte diskrete Zustände die Tragfähigkeit spezifiziert, wobei zum Beispiel bei einer stufenlos verstellbaren Kranbaugruppe der Ist-Zustand ermittelt wird und zum Beispiel durch Interpolation zwischen benachbarten Stützstellen eine Tragfähigkeit ermittelt wird. Jedoch wird bei dieser Vorgehensweise möglicherweise eine zu geringe Traglast ermittelt und somit die Einsetzbarkeit des Kranes zu stark eingeschränkt.

Die Sicherheit eines Krans wird mittels einer Kransteuerung während des Kranbetriebes überwacht. Die Kransicherheit ist dann gewährleistet, wenn verschiedene vorgegebene Sicherheitskriterien eingehalten werden. Mögliche Sicherheitskriterien sind zum Beispiel die Bauteilfestigkeit oder Tragfähigkeit von Kransystemen, wie zum Beispiel Ausleger, Hubseil, Lasthaken, Drehkranz- und Wippzylinder sowie die Standsicherheit des Krans, das heißt die Vermeidung eines Krankippens, zum Beispiel bedingt durch die Last, Wind, einen bestimmten Oberwagendrehwinkel usw.

Die EP 2 674 384 A1 schlägt vor mehrere Sicherheitskriterien während des Kranbetriebes zu überwachen, indem für jedes Kriterium, das von wenigstens einem die Krankonfiguration oder Kranbewegung während des Kranbetriebs betreffenden Parameter abhängig ist, ein zulässiger spezifischer Grenzwert während des Kranbetriebes berechnet und auf Einhaltung überwacht wird, wobei vollständig auf die Berücksichtigung einer Traglasttabelle für entsprechende Kriterien verzichtet wird.

Die WO 2015/162096 A1 offenbart ein Verfahren zum Betreiben eines Mobilkrans mit einem Ausleger, wobei maximal zulässige Traglasten für mehrere Stellungen in einem vorgegebenen Stellungsbereich des Auslegers ermittelt werden, eine Traglastgrenze oder ein Traglastbereich basierend auf einer angehängten Last und auf den maximal zulässigen Traglasten für die mehreren Stellungen des vorgegebenen Stellungsbereichs des Auslegers ermittelt wird und der Mobilkran abhängig von der Traglastgrenze oder einem Traglastbereich betrieben wird.

Die DE 10 2015 006 992 A1 offenbart ein Verfahren zur Berechnung von relevanten Daten für den Betrieb eines Krans, wobei das System einen Kran, ein Kommunikationsnetz, sowie ein Rechenzentrum umfasst, wobei zunächst kranseitig mehrere Kenngrößen des Krans bestimmt und diese über das Kommunikationsnetz an das Rechenzentrum übermittelt werden, im Rechenzentrum eine oder mehrere für den Kranbetrieb relevante Daten auf Grundlage der empfangenen Kenngrößen des Krans berechnet und ausgewählt werden und die berechneten und ausgewählten für den Kranbetrieb relevanten Daten an den Kran zurück übertragen werden.

Die EP 2 674 384 A1 offenbart ein Verfahren zur Überwachung der Kransicherheit eines Krans mit einer variablen Abstützsbasis und einer Überwachungseinheit, wobei mehrere Sicherheitskriterien während des Kranbetriebes überwacht werden, indem für jedes Kriterium, das von wenigstens einem die Krankonfiguration und/oder Kranbewegung während des Kranbetriebs betreffenden Parameter abhängig ist, ein zulässiger spezifischer Grenzwert während des Kranbetriebs berechnet und auf Einhaltung überwacht wird. Ergänzend können Traglasttabellen in einer Speichereinheit des Krans hinterlegt werden, bei welchen es sich jedoch ausschließlich um solche handelt, die nicht von einem die Krankonfiguration und/oder Kranbewegung während des Kranbetriebes betreffenden Parameter abhängig sind, so dass folglich hauptsächlich festigkeitsrelevante Traglastbeschränkungen auf dem Kran als vorgerechnete Traglasttabellen hinterlegt werden.

Es ist eine Aufgabe der vorliegenden Erfindung ein Verfahren zum Ermitteln der Tragfähigkeit eines Krans mit mindestens zwei Baugruppen vorzuschlagen.

Diese Aufgabe wird durch die Gegenstände der unabhängigen Ansprüche gelöst. Weitere vorteilhafte Ausbildungen sind in den abhängigen Ansprüchen definiert.

## Funktionselement

Ein Funktionselement ist eine funktionale Einheit eines Krans, welche eine bestimmte Funktion ausführen kann, wie z.B. Ausleger, Hubwerk, Wippzylinder, Stützträger oder Gegengewicht. Der Zustand eines Funktionselements kann durch mindestens einen Parameter beschrieben oder definiert werden. Es ist möglich, dass ein Funktionselement verschiedene Zustände hat (z.B. ein variabler Ausleger hat zwei **Zustandsparameter:** Länge und Auslegerwinkel; ein Stützträger hat den Zustandsparameter Ausfahrlänge oder Stützbreite), welche die Konfiguration, also z.B. die Geometrie, z.B. Länge oder Drehwinkel, des Funktionselements definieren. Üblicherweise wird ein Kran vor Inbetriebnahme konfiguriert, so dass die **Zustandsparameter** der Funktionselemente festgelegt werden. Während eines Hebevorgangs findet dann gewöhnlich keine Umkonfiguration mehr statt, d.h. die Zustandsparameter bleiben konstant.

Jedoch können einzelne Funktionselemente auch im Betrieb, also z.B. während des Hebens der Last, verschiedene durch **Betriebsparameter** (zu unterscheiden von Zustandsparameter) definierte Zustände annehmen (z.B. Betriebsparameter des Hubwerks: Hubhöhe; Betriebsparameter eines Stützträgers: Stützdruck; Betriebsparameter des Auslegers: Auslegerwinkel oder Spitzenwinkel).

Ein Funktionselement kann eine bestimmte oder spezifische **Festigkeit** aufweisen, welche angibt bis zu welcher Belastung (gemessen z.B. in Tonnen Hubgewicht) das Funktionselement fest, also z.B. versagensfrei oder betriebssicher ist.

Ein Funktionselement kann eine bestimmte oder spezifische **Stabilität** aufweisen, welche angibt bis zu welcher Belastung (gemessen z.B. in Tonnen Hubgewicht) das Funktionselement stabil steht, also z.B. nicht kippt oder zu einem Kippen des Krans führt.

Dabei können Festigkeit und Stabilität von der Konfiguration des Funktionselements (also z. B. von dessen Zustandsparametern) und/oder auch von dessen Betriebsparametern abhängen, so dass sich bei unterschiedlichen Konfigurationen und/oder verschiedenen Betriebszuständen unterschiedliche zulässige Belastungen ergeben.

Da ein Funktionselement den Anforderungen sowohl an die Festigkeit als auch an die Stabilität genügen muss, kann die Tragfähigkeit unter Berücksichtigung beider Kriterien ermittelt werden. Üblicherweise wird von der maximalen Tragfähigkeit unter Berücksichtigung der Festigkeit und der maximalen Tragfähigkeit unter Berücksichtigung der Stabilität die geringere maximale Tragfähigkeit als zulässige Traglast gewählt. Optional kann auch nur die Tragfähigkeit unter Berücksichtigung der Festigkeit ermittelt werden. Die Stabilität kann im Hinblick auf den Kran als Ganzes, also zusammengesetzt aus den einzelnen Funktionselementen, überwacht werden.

Im Falle nur eines einzigen Zustandsparameters des Funktionselements kann z.B. die Tragfähigkeit oder maximale Traglast über den Zustandsparameter aufgetragen werden. Dies kann auch als zweidimensionale Grenzkurve (oder Grenzbelastung bzw. Gültigkeitsbereich) bezeichnet werden. Bei drei oder mehr Zustandsparametern des Funktionselements können sich auch drei- oder mehrdimensionale Grenzkurven bzw. Grenzflächen ergeben.

## Baugruppe

Eine Baugruppe beinhaltet mindestens ein Funktionselement, kann aber auch aus zwei oder mehr Funktionselementen zusammengesetzt sein.

Übliche Baugruppen eines Krans sind: Ausleger oder Teile des Auslegers wie Hauptausleger, Spitzenverlängerung, Gesamtausleger; Oberwagen oder Teile des Oberwagens wie Gegengewicht, auch unter Berücksichtigung der Position, Hubwerk, Drehverbindung, Wippzylinder, Unterwagen oder Teile des Unterwagens wie Abstützungen, Fahrwerksrahmen, Schwerpunkte, Rüstzustände etc.

Eine Baugruppe hat ebenso wie die Funktionselemente eine Grenzkurve, welche sich aus den einzelnen baugruppenbedingten Grenzkurven oder Tragfähigkeiten der Baugruppenbestandteile ergibt. Als zulässige Traglast wird z. B. die geringste maximale Traglast der jeweiligen Baugruppenbestandteile gewählt.

Eine Baugruppe kann z.B. aus mehreren Funktionselementen zusammengesetzt sein, wie z.B. der Oberwagen bestehend aus Wippzylinder, Hubwerk, Gegengewicht und Ölvolumen. Das Ölvolumen kann je nach Betriebszustand, z.B. Stellungen der Hydraulikzylinder, sehr stark schwanken und kann damit das Oberwagengewicht und damit den Gesamtschwerpunkt des Krans beeinflussen. Dies kann als Parameter für die Stand- bzw. Kippsicherheit relevant sein Eine weitere Baugruppe kann der Unterwagen bestehend aus z.B. vier oder mehr Stützträgern sein, welche verschiedene gleiche oder voneinander unabhängig auch variable oder verschiedene Ausfahrlängen, Festigkeiten und Stützkraftgrenzen aufweisen können.

Beispielsweise kann folgende Zuordnung vorgenommen werden:

Baugruppe Ausleger :
Funktionselemente: Teleskopteile, Telezylinder, Spitzenverlängerungen, Abspannvorrichtungen
Baugruppe Oberwagen:
Funktionselemente: Drehtisch (Stahlbau), Wippzylinder, Hubwerk, Drehverbindung, Gegengewicht
Baugruppe Unterwagen:
Funktionselemente: Fahrwerksrahmen, Abstützträger, Abstützzylinder, Bereifung

## Grenzbelastung / Grenzkurve

Eine Grenzbelastung oder Grenzkurve, auch Traglastkurve, gibt für ein Funktionselement, eine Baugruppe, oder einen Kran an, welche maximale Traglast in welcher Konfiguration, also z. B. abhängig von den Werten der Zustandsparameter und optional auch der Betriebsparameter, gehoben werden kann oder gehoben werden darf.

Eine oder mehrere Grenzbelastungen oder Grenzkurven können in einem Speicher gespeichert sein, auf welchen vor, bei oder nach der Konfiguration des Krans für die konkrete aktuelle Konfiguration des Kranes zugegriffen wird, um die Traglasten der Funktionselemente oder Baugruppen des Krans und/oder für den gesamten Kran auszulesen oder zu ermitteln.

Grenzbelastungen oder Grenzkurven können auch als eine Anzahl von diskreten Werten abgespeichert werden, wobei die Traglasten für die jeweilige konkrete Konfiguration bei Bedarf auch durch Interpolation oder Extrapolation gespeicherter Werte ermittelt werden können, wie zum Beispiel in der EP 1 748 021 beschrieben.

Grenzbelastungen oder Grenzkurven können auch zum Teil oder vollständig durch einen oder mehrere formelmäßige Zusammenhänge angegeben und vorab oder bei Bedarf errechnet werden und falls erforderlich durch abgespeicherte Grenzbelastungen oder Grenzkurven ergänzt werden.

Mittels Grenzbelastungen oder Grenzkurven kann die Gesamttragfähigkeit eines Krans in der jeweiligen Konfiguration ermittelt werden. Dabei können sich abhängig von den Betriebsparametern des Krans in unterschiedlichen Betriebszuständen eines Krans mit fester Konfiguration z. B. auch unterschiedliche Traglasten ergeben. Es ist auch möglich, dass bei einer vorgegebenen konstant bleibenden Konfiguration die Betriebsparameter keinen Einfluss auf die maximale Traglast eines Kranes haben.

## Traglastermittlung

Prinzipiell kann eine Traglastermittlung oder Tragfähigkeitsermittlung für einen Kran basierend auf einer Berechnung unter Verwendung einer aktuellen Konfiguration des Kranes oder aktuell vorliegenden Parametern für den konkreten Zustand des Kranes erfolgen.

Alternativ oder ergänzend kann die Tragfähigkeit eines Kranes basierend auf einem oder mehreren vorher ermittelten oder berechneten und abgespeicherten Tragfähigkeitswerten oder Tragfähigkeitswerten einer oder mehrerer Funktionselemente oder Baugruppen ermittelt werden. Weiterhin ist es möglich, eine Kombination beider Verfahren anzuwenden, also die Tragfähigkeit eines Kranes basierend auf vorher abgespeicherten Werten sowie basierend auf einer Berechnung, wie z.B. einer Tragfähigkeitsberechnung basierend auf einem formelmäßigen Zusammenhang oder auch einer Interpolations- oder Extrapolationsberechnung, zu ermitteln.

Beispielsweise können für einen Ausleger, wie einen Hauptausleger, ausgebildet z. B. als Teleskopausleger, Traglasten oder Auslegergrenzkurven für jeden Teleskopierzustand vorab ermittelt und gespeichert werden. Die Speicherung kann beispielsweise in Gestalt einer Zuordnung einer maximalen Traglast zu einem z.B. als kontinuierlichen Parameter vorgebbaren Radius erfolgen. Grafisch dargestellt ergibt sich eine Traglastkurve aufgetragen über den Radius. Eine solche Kurve kann z. B. für jeden Teleskopierzustand abgespeichert werden.

Werden beispielsweise fünf Teleskope zu je zwei Verbolzungslöchern im Ausleger vorgesehen, so ergeben sich für jedes Teleskop drei Positionen (ganz eingeschoben + zwei durch die Verbolzungslöcher definierte verschiedene Ausschubzustände), so dass insgesamt $3^5 = 243$ Teleskopierzustände oder Hauptauslegerlängen oder unterschiedliche Konfigurationen möglich sind. Wird für jede dieser 243 Teleskopierungen eine Auslegergrenzkurve vorab ermittelt und gespeichert, so liegen insgesamt 243 Kurven im Speicher vor.

Formelmäßig lässt sich die Tragfähigkeit oder Traglast des Auslegers darstellen als:

$$\text{Last}_{\text{Ausleger}} = f_{\text{Ausleger}} (\text{Tele}, \text{Radius})$$

Für das Gegengewicht GG können verschiedene Konfigurationen gespeichert werden, wobei beispielhaft von zehn verschiedenen Konfigurationen ausgegangen wird.

Für den Oberwagen kann z.B. die Festigkeit für den Drehtisch selbst vorab ermittelt und gespeichert werden, z.B. in Abhängigkeit von Ausleger und Gegengewicht GG. Formelmäßig lässt sich dies darstellen als:

$$\text{Last}_{\text{Drehtisch}} = f_{\text{Drehtisch}} (\text{Last}_{\text{Ausleger}}, GG)$$

Festigkeit und Gesamtschwerpunkt des Oberwagens sind abhängig von Ausleger, Gegengewicht und Drehtisch, was formelmäßig dargestellt werden kann wie folgt:

$$\text{Last}_{\text{Oberwagen}} = f_{\text{Oberwagen}} (f_{\text{Drehtisch}} ( \text{Last}_{\text{Ausleger}}, GG), GG, f_{\text{Ausleger}}, (\text{Tele}, \text{Radius}))$$

Durch die Parameter Teleskopierung (im oben spezifizierten Beispiel 243 Kurven) und Gegengewicht (10 verschiedene Konfigurationen gemäß Beispiel) ergeben sich theoretisch 2430 Kurven. Die aktuelle Oberwagengrenzkurve wird berechnet.

Die Drehverbindung kann eine gespeicherte Grenzkurve aufweisen und kann die Oberwagenlast gegebenenfalls reduzieren:

$$\text{Last}_{\text{Drehverbindung}} = F_{\text{Drehverbindung}} (\text{Last}_{\text{Oberwagen}} (\text{Tele}, \text{Radius}, GG))$$

Dies hat jedoch keinen Einfluss auf die Anzahl der abgespeicherten Kurven, welche im angegebenen Beispiel bei 2430 verbleibt.

Ein Unterwagen weist n Abstützungen auf (typischerweise vier, optional auch weniger oder mehr, z. B. sechs oder acht Abstützungen), welche in Gestalt eines Abstützkastens und Abstützzylinders ausgebildet sein können. Jede der n Abstützungen weist eine Grenzkurve auf, welche von der Konfiguration, also beispielsweise der Ausfahrlänge, der Abstützung abhängt:

$$\text{Last}_{Ai} = f(\text{Länge}_{Ai})$$

Die Unterwagenkonfiguration kann somit durch n Parameter, also beispielsweise n = 4 Parameter, spezifiziert werden.

Jede der n Abstützungen kann z.B. 3 diskrete Ausfahrlängen aufweisen wodurch sich $3^4$ = 81 unterschiedliche Kombinationen ergeben würden. Hier gibt es dann also 2430 x 81 = 196830 Möglichkeiten.

Um zu vermeiden, dass eine so große Anzahl an Kurven gespeichert werden muss, könnte z.B. nur eine vorgegebene und begrenzte Anzahl n an grundlegenden Abstützkonfigurationen, wie z.B. nur drei Abstützkonfigurationen, berücksichtigt und gespeichert werden, wie z.B. alle Stützen 0 % ausgefahren (1. Abstützkonfiguration), alle Stützen 50% ausgefahren (2. Abstützkonfiguration) und alle Stützen 100% ausgefahren (3. Abstützkonfiguration). Hier gibt es dann weniger (im angegebenen Beispiel: n = 3) Möglichkeiten, also 2430 x 3 = 7290 Möglichkeiten.

Zusätzlich enthält der Unterwagen den Parameter Drehwinkel (Oberwagendrehung relativ zum Unterwagen). Der Drehwinkel ist kontinuierlich verstellbar. Wenn für einen Rundumdrehwinkel von 360Grad eine Winkelauflösung von 1Grad gewählt wird, ergeben sich 360 Möglichkeiten. Sollen die im Ausführungsbeispiel oben beispielhaft erwähnten 2430 Kurven für eine Winkelauflösung von 1Grad abgespeichert werden, so ergeben sich insgesamt 360 x 2430 x 3 = 2624400 Kurven für n= 3 Abstützkonfigurationen. Die Speicherung einer so großen Anzahl an Kurven ist jedoch aus technischen Gründen problematisch und nicht praktikabel.

Alternativ oder ergänzend kann z.B. ein voller 360Grad-Drehbereich berücksichtigt werden, wobei eine maximale Traglast dann so angegeben wird, dass diese über den vollen 360Grad-Drehbereich getragen werden kann. Dabei ist dann derjenige Drehwinkel mit der kleinsten maximalen Traglast maßgeblich, d.h. es wird eine maximale Traglast für diejenigen Drehwinkel verschenkt, welche prinzipiell mehr Traglast aufnehmen könnten.

Alternativ kann der 360Grad-Drehbereich auch unterteilt werden und es können vorgegebene Drehwinkelabschnitte definiert werden, für welche eine erlaubte maximale Traglast konstant ermittelt und vorgegeben werden kann. Beispielsweise können m gleichgroße oder auch unterschiedlich große Bereiche vorgegeben werden, wie z.B. m = 4 Bereiche zu je 90Grad. Mit n Abstützkonfigurationen und einer Bereichsunterteilung in m Bereiche erhält man n x m x (mögliche Teleskopierzustände) x (mögliche Gegengewichtskonfigurationen) abzuspeichernde Kurven, also für die oben angegebenen Beispiele 3 x 4 x 2430 = 29160 Kurven. Hierdurch kann die oben angegeben Anzahl von 2624400 Kurven zwar deutlich reduziert werden, jedoch kann in der Praxis auch die Ermittlung und Speicherung einer solch großen Anzahl an Kurven technisch schwierig oder problematisch sein, insbesondere wenn z.B. ein Ausleger mehr Verbolzungslöcher aufweist und/oder im Betrieb verschiedene Spitzen verwendet werden. Gemäß einer Ausführungsform der Erfindung wird zur Ermittlung der Tragfähigkeit eines Kranes sowohl eine Berechnung vorgenommen als auch auf vorab gespeicherte Werte, wie z.B. vorab gespeicherte Tragfähigkeitswerte von Funktionselementen und/oder Baugruppen zugegriffen.

Unter einer Berechnung kann im Sinne der vorliegenden Erfindung verstanden werden, dass z.B. ein formelmäßiger Zusammenhang bekannt ist, mittels dessen für konkret vorliegende Zustandsparameter und/oder Betriebsparameter eines Funktionselements und/oder einer Baugruppe ermittelt oder berechnet werden kann, wie groß die maximale Tragfähigkeit ist.

Gemäß einer Ausführungsform der Erfindung können auf der Basis von vorab ermittelten und abgespeicherten Werten Referenzdaten oder Überprüfungsdaten zur Überprüfung oder Kontrolle herangezogen werden, um zu ermitteln, ob die ermittelte maximale Traglast auch z.B. plausibel ist, so dass das errechnete Ergebnis validiert oder überprüft werden kann.

Beispielsweise können zur Überprüfung einer Berechnung ausgewählte Traglast-Kurven abgespeichert werden, wie z.B.:

- Traglast für 360Grad, alle Stützen bei 100 % (vollständig ausgefahren): maximale Traglast (Beispiel): 10t
- Traglast für 360Grad, alle Stützen gleich, jedoch nur zu einem Teil ausgefahren (z.B. bei 80 %): maximale Traglast (Beispiel): 9t
- Optional weitere Traglasten für 360Grad, alle Stützen nur teilweise ausgefahren (beispielsweise bei 30 %, 50%...): maximale Traglast (Ausführungsbeispiel bei 50% ausgefahrenen Stützen): 6t
- Traglast für 360Grad, alle Stützen bei 0%: Traglast (Beispiel): 2t

Ergänzend können zusätzlich optional Referenztraglast-Punkte für vorgegebene Drehwinkel bei einem vorgegebenen Ausfahrzustand der Stützen abgespeichert werden. Werden als Drehwinkel diejenigen Winkel berücksichtigt, bei welchen der Ausleger über einer Stütze ist (also z.B.: 45Grad, 135Grad, 225Grad, 315Grad), so ergeben sich in der Regel hohe Traglasten, also Traglasten, welche in einzelnen Anwendungsfällen über den Rundum-Traglasten (Traglast für 360Grad) liegen können. Als Ausführungsbeispiel sei (für z. B. vollständig ausgefahrende Stützen, also 4 x 100%) angegeben:

- Traglast für 45Grad/135Grad/225Grad/315Grad: überall gleich 13t

Für den gleichen Zustand der Stützen (also z.B. 4x100% ausgefahren) kann optional auch eine Traglast für die Zwischenzustände ermittelt werden, also z.B. eine Traglast für Drehwinkel 0Grad, 90Grad, 180Grad und 270Grad, bei welchen sich der Ausleger von oben betrachtet zwischen den Stützen befindet, so dass sich in der Regel eine niedrigere Traglast ergibt, als bei obigem Beispiel, wo der Ausleger über der Stütze ist.

Als Ausführungsbeispiel wird für diese Zustände als maximale Traglast überall gleich 10t angegeben (als Minimum, wie 360° Rundumlast).

Allgemein können obige Traglastkurven oder Traglastwerte für einen oder mehrere vorgegebene Ausfahrzustände der Stützen (also z.B.: alle Stützen eingefahren, alle Stützen zum Teil ausgefahren, wie z.B. 10%, 20%, ..., 90%; und alle Stützen vollständig ausgefahren), als Rundum-Traglast (Traglast für 360Grad) und/oder auch für vorgegebene Sektoren oder einzelne Winkel oder Winkelbereiche (siehe vorheriges Beispiel: Ausleger über Stützen oder Ausleger zwischen Stützen) vorab ermittelt und abgespeichert werden.

Ergänzend zu obigem Beispiel können z.B. auch Referenztraglast-Punkte für nur teilweise ausgefahrene Stützen, z.B. 4 x 80%, ermittelt und wie folgt abgespeichert werden:

- Traglast für 45Grad/135Grad/225Grad/315Grad (Ausleger über Stütze): überall gleich 11t
- Traglast für 90Grad/270Grad (Ausleger zwischen Stützen): Traglast überall 9t (Minimum, Rundumlast)
- Traglast für 0Grad/180Grad (Ausleger zwischen Stützen): Traglast überall 10t

Die Vorab-Ermittlung und Abspeicherung von Referenztraglastpunkten für ausgewählte Zustände wird erfindungsgemäß nicht zur Ermittlung der Traglast verwendet (wäre jedoch möglich, wenn z.B. einer der dort exakt spezifizierten Zustände vorliegt). Stattdessen werden diese vorab gespeicherten Werte oder Kurven zur Überprüfung einer Berechnung verwendet. Die erfindungsgemäße Traglastermittlung erfolgt somit nicht durch Interpolation oder Extrapolation auf der Basis vorab gespeicherter Werte, sondern stattdessen durch eine Berechnung, wobei eine Überprüfung oder Validierung eines oder mehrerer berechneter Traglastwerte anhand von vorher abgespeicherten Referenzdaten erfolgt. Die Referenzdaten haben somit keine Auswirkung und keinen Einfluss auf einen ermittelten Zahlenwert für eine maximale Traglast, sondern werden lediglich verwendet, um den ermittelten Zahlenwert zu überprüfen, also für gültig und verwendbar zu erklären oder für ungültig zu erklären. In diesem Fall kann z. B. ein Warnsignal ausgegeben und/oder der Kran automatisch abgeschaltet oder angehalten werden.

Beispiel 1

Bei einer aktuellen Krankonfiguration sind alle Abstützungen vollständig ausgefahren (4x100%). Der Drehwinkel (Oberwagen relativ zu Unterwagen) beträgt 35Grad.

Eine Berechnung anhand einer vorgegebenen Formel liefert eine maximale Traglast von 12,5t.

Erfindungsgemäß wird zur Überprüfung des berechneten Wertes von 12,5t auf vorab gespeicherte Referenzwerte wie beispielhaft oben angegeben zurückgegriffen. Dabei wird zur Überprüfung auf einen oder mehrere vorab abgespeicherte Datensätze zurückgegriffen, welche z.B. möglichst nah an der aktuellen Konfiguration liegen, wobei also z.B. einzelne Parameterwerte übereinstimmen oder einen geringen oder geringsten Abstand zu vorliegenden Parameterwerten aufweisen. Dabei können auch solche Datensätze verwendet werden, welche zu einem vorgegebenen Parameterwert einen geringsten Abstand nach oben und/oder nach unten (also nächstgrößerer und/oder nächstkleinerer abgespeicherter Wert) aufweisen. Dabei können ein oder mehrere Referenzwerte oder Vergleichswerte ermittelt werden, welche zur Überprüfung der berechneten maximalen Traglast herangezogen werden können.

Für das oben angegebene Ausführungsbeispiel kann beispielsweise als erster Vergleichswert der Referenztraglastpunkt (Drehwinkel: 45Grad bei 4x100%) herangezogen werden, welcher im obigen Ausführungsbeispiel eine maximale Traglast von 13t aufweist.

Ein zweiter nächstliegender vorab gespeicherter Wert liegt bei (Drehwinkel: 0Grad und 4x100%), welcher im obigen Ausführungsbeispiel mit einer geringeren Traglast von 10t abgespeichert wurde.

Da bekannt ist, dass, wie oben erwähnt, eine maximale Traglast bei einem über einer Stütze liegenden Drehwinkel (also z.B. 45Grad) größer sein kann (Ausführungsbeispiel: 13t) als bei einem zwischen den Stützen liegenden Drehwinkel (0Grad), welche mit 10t angegeben ist, kann das Intervall zwischen 10t und 13t als Plausibilitätsintervall basierend auf den vorab gespeicherten Traglastwerten ermittelt und angegeben werden, um zu überprüfen, ob die berechnete maximale Traglast plausibel ist und somit validiert werden kann.

Die ermittelte Traglast betrug im Ausführungsbeispiel 12,5t und liegt somit im angegebenen Intervall, so dass die berechnete Traglast als richtig angenommen wird.

Falls die Berechnung einen Wert liefern würde, welcher außerhalb des Intervalls liegt, wird davon ausgegangen dass ein Fehler vorliegt und es kann z.B. ein Abschaltvorgang vorgenommen werden.

Beispiel 2

Die aktuelle Konfiguration betrage 4x80% Abstützung und 35Grad Drehwinkel.

Eine Berechnung liefert eine Traglast von 10,8t.

Zur Überprüfung dieser Berechnung können basierend auf obigem Beispiel folgende nächstliegende vorab gespeicherte Datensätze herangezogen werden:

- 4x80% (Stützen), Drehwinkel 45Grad: vorab gespeicherte maximale Traglast 11t
- 4x80% (Stützen), Drehwinkel 0Grad: vorab gespeicherte maximale Traglast 9t

Die berechnete aktuelle Traglast von 10,8t liegt im Intervall zwischen 9t und 11t und wird somit als gültig betrachtet.

Um eine verbesserte Überprüfung durchführen zu können, können auch Tendenzen oder Gradienten der Traglastwerte betrachtet werden. Dabei wird als Zusatzinformation z.B. berücksichtigt, dass eine Traglast im Normalfall umso größer ist, je weiter die Stützen ausgefahren sind und umso geringer ist, je weiter die Stützen eingefahren sind.

Es wird angemerkt, dass obiges Ausführungsbeispiel auch entsprechend bei anderen Parametern herangezogen werden kann, wobei als Information auch immer berücksichtigt werden kann, welches die stabilen Zustände (Zustände oder Konfigurationen oder Parameterwerte mit höherer Traglast) und welches die Zustände oder Parameterwerte mit niedrigerer Traglast sind, um Plausibilitätsbetrachtungen, wie obige Gradienten-Betrachtung, durchzuführen. Weiterhin wurden im obigen Ausführungsbeispiel Vergleichsintervalle nur beispielhaft angegeben, es können jedoch auch feiner oder gröber abgestufte Datensätze oder Vergleichsintervalle verwendet werden. Allgemein wird die Überprüfung der Sicherheit einer Berechnung größer, je feiner die Unterteilung der vorab gespeicherten Parameterwerte ist.

Somit kann erfindungsgemäß durch relativ einfache Formeln eine Berechnung durchgeführt werden. Diese Berechnung kann basierend auf vergleichsweise wenigen vorab gespeicherten Datensätzen überprüft und validiert werden.

Es ist also nicht mehr erforderlich, eine sehr große Vielzahl an Kurven vorab zu berechnen und abzuspeichern und diese Kurven direkt zu nutzen beziehungsweise zwischen diesen Kurven zu interpolieren. Stattdessen kann erfindungsgemäß die Anzahl der abgespeicherten Kurven stark verringert werden, da diese nicht zur eigentlichen Berechnung z. B. durch Interpolation, sondern nur zur Überprüfung einer Berechnung verwendet werden. Als ermittelte Traglast wird folglich auch nur die entsprechend erfindungsgemäß validierte Berechnung verwendet und nicht ein Wert, welcher z. B. aus einer Interpolation vorab gespeicherter Kurven erhalten wurde.

Die Erfindung wird anhand von Ausführungsbeispielen unter Bezugnahme auf die Figuren beschrieben. Es zeigen:

Figur 1    eine zweidimensionale Tragfähigkeitskurve eines Auslegers (Radius - Tragfähigkeit);
Figur 2    eine Grenzkurve des Oberwagens basierend auf den Grenzkurven Auslegerfestigkeit, Drehverbindung und Wippzylinder;
Figur 3    den Arbeitsmodus "360-Grad-Tabelle";
Figur 4    den Arbeitsmodus "Eingeschränkter Arbeitsbereich";
Figur 5    den Arbeitsmodus "Sektorenbezogene Tragfähigkeiten";
Figur 6    den Arbeitsmodus "Optimierte Tragfähigkeit";
Figur 7    eine Bedienungsanzeige zur Darstellung von Traglasten und Arbeitsbereichen;
Figur 8    einen Kran mit Funktionselementen;
Figur 9    Sensoren des Krans in Figur 8; und
Figur 10   ein Ablaufdiagramm zur Berechnung Traglastvolumen.

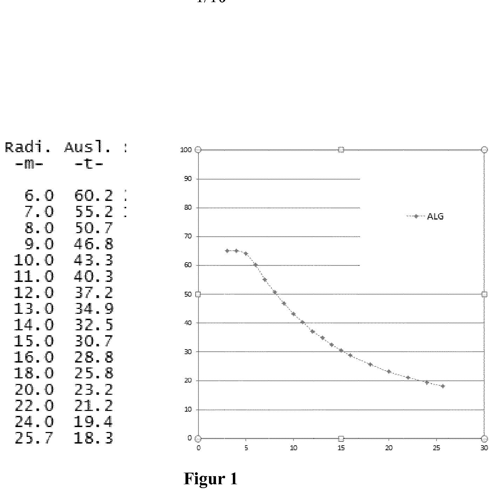

Ein Auslegersystem kann z. B. eine Grenzkurve in Form eines zweidimensionalen Parametersatzes "Radius/Tragfähigkeit" und/oder "Auslegerwinkel/Tragfähigkeit" haben. Diese Daten können z. B. in vordefinierten Schrittweiten, wie z. B. 1,0 Meter für den Radius und 1,0 Grad für den Winkel, berechnet und gespeichert werden. Beispielsweise kann für eine endliche Anzahl von Auslegerlängen und/oder Teleskopierungen und optional Kombinationen mit Spitzenlängen eine endliche Anzahl von zweidimensionalen Parametersätzen berechnet und gespeichert werden, wie in Figur 1 gezeigt, wobei über die Abszisse die Auslegerlänge (oder der Radius) und über die Ordinate die maximale Traglast aufgetragen ist. Aus der eingezeichneten und vorberechneten Grenzkurve lässt sich z. B. ablesen, dass die maximale Tragfähigkeit bei der Auslegerlänge 15 Meter in etwa 30 Tonnen beträgt.

Die Grenzkurven für weitere Funktionselemente oder Bauteile des Oberwagens sind im Normalfall ebenfalls zweidimensional und können mit den Grenzkurven des Auslegers zu einem zweidimensionalen resultierenden Parametersatz kombiniert werden. So ergeben sich bei z. B. einer endlichen Anzahl $n_G$ von Gegengewichten und $n_A$ Auslegerlängen insgesamt $n_A * n_G$ zweidimensionale Parametersätze für den gesamten Oberwagen.

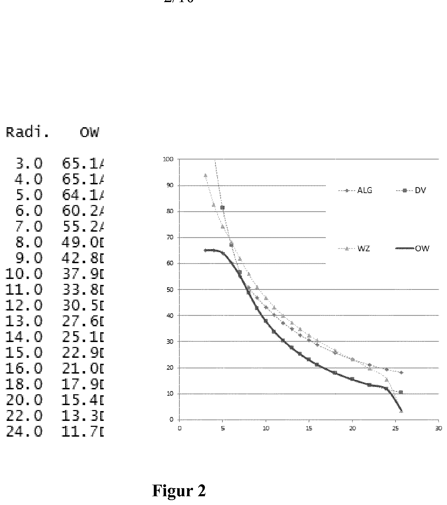

Figur 2 zeigt die in Figur 1 schon dargestellte Traglastkurve für die Auslegerfestigkeit ALG, wobei zusätzlich noch die Grenzkurven für die Drehverbindung DV, den Wippzylinder WZ und den Oberwagen OW (alle beispielhaft aufgetragen über den Radius des Auslegers) eingezeichnet sind, wodurch diese vergleichbar werden. Die Wippzylinderkurve kann z.B. auch über der Wippzylinderlänge aufgetragen werden. Der Zusammenhang zwischen Wippzylinderlänge und Radius kann dann wieder durch den Kranzustand hergeleitet werden.

Wie aus Figur 2 ersichtlich, ergibt sich für die aus diesen Funktionselementen zusammen gesetzte Baugruppe als Baugruppenminimum die unterste eingezeichnete Kurve als Traglastkurve, welche z. B. bis zu einer Auslegerlänge von etwa 7 Metern von der Auslegerfestigkeits-Grenzkurve bestimmt wird. Für eine Auslegerlänge im Bereich von 7 Metern bis etwa 24 Metern wird die Baugruppen-Traglastkurve durch die Grenzkurve der Drehverbindung bestimmt, da diese in dem genannten Bereich geringere Werte für die maximale Traglast zulässt als die anderen Grenzkurven. Für einen Wert der Auslegerlänge oberhalb von etwa 24 Metern wird die Baugruppen-Traglastkurve durch die in diesem Bereich die geringsten zulässigen Traglasten aufweisende Wippzylinder-Grenzkurve definiert.

Die in Figur 2 gezeigte Grenzkurve für den Oberwagen ist beispielhaft für ein konstantes Gegengewicht dargestellt. Für ein anderes Gegengewicht kann auf die angegebene Art eine andere Grenzkurve ermittelt werden.

Die Grenzkurven für die Bauteile des Unterwagens lassen sich im Normalfall ebenfalls mit einem zweidimensionalen Parametersatz darstellen. Dabei wird die Stellung des Oberwagens relativ zum Unterwagen (Drehwinkel) als Variable ausgeschlossen und ein für alle Stellungen zulässiger Minimalwert vorab ermittelt. Bei einer Vielzahl von Kombination einzelner Parameter, insbesondere der Ausfahrlänge der Stützträger, ergeben sich somit weitere Kombinationsmöglichkeiten mit den Oberwagen-Parametersätzen. Bei beispielsweise vier Stützträgern S1, S2, S3 und S4 ergeben sich $n_{S1} * n_{S2} * n_{S3} * n_{S4}$ Kombinationsmöglichkeiten mit den Oberwagen- Parametersätzen. Ein einzelner Parameter $n_S$ kann dabei in einer Vielzahl von endlichen Zuständen oder auch in einer unendlichen (stufenlosen) Anzahl von Zuständen vorliegen, sodass sich eine endliche oder auch unendliche Vielzahl von Kombinationen ergibt. Häufig gibt es eine begrenzte Anzahl von Zuständen der Stützträger (wie z. B. Ausfahrlänge: 0%, 50% und 100%) und eine begrenze Anzahl von Kombinationen (z. B. alle 0%, alle 50 %, alle 100%; eine Seite 50%, gegenüberliegende Seite 100%;...).

Bei infiniten oder stufenlosen Möglichkeiten für die Parameter $n_{Si}$, $n_{S2}$, $n_{S3}$, $n_{S4}$, also z.B. einer stufenlosen voneinander unabhängigen Ausfahrbarkeit der Stützträger, ergeben sich unendlich viele Kombinationsmöglichkeiten.

Bei der Reduzierung der Gesamttraglastkurve auf eine Minimalwertkurve durch Ausschluss der variablen Stellung des Oberwagens relativ zum Unterwagen (Drehwinkel), also die Variable "Drehwinkel" wird auf eine Konstante gesetzt, werden Bereiche, wie z. B. bestimmte Drehstellungen des Oberwagens relativ zum Unterwagen, welche höhere Tragfähigkeiten aufweisen können, nicht optimal ausgenutzt.

Die Tragfähigkeit eines Krans mit mindestens zwei Baugruppen, wobei jede Baugruppe durch mindestens einen Parameter, z.B. einen Betriebsparameter und/oder einen Zustandsparameter spezifiziert wird, wird z. B. dadurch ermittelt, dass für mindestens eine **erste Baugruppe**, welche die geringste Zahl an Parametern oder die geringste Anzahl an Variationsmöglichkeiten oder den geringsten Gradienten (die geringste Veränderung der maximalen Traglast bei Veränderung eines oder mehrerer Zustandsparameters) aufweist oder aufweisen, die Grenzbelastung oder Grenzkurve oder maximale Traglast vorab ermittelt und abgespeichert wird und für den oder die aktuellen Parameter der zugeordnete Wert der Traglast ausgelesen wird, wobei zumindest für eine **zweite Baugruppe** mit der größten Zahl an Parametern oder größten Anzahl an Variationsmöglichkeiten oder mit dem höchsten Gradienten (die stärkste Veränderung der maximalen Traglast bei Veränderung eines oder mehrerer Zustandsparameters) die Grenzbelastung oder maximale Traglast erst bei Bedarf ermittelt wird oder werden. Diese bedarfsgemäße Ermittlung basiert auf der aktuell gegebenen Betriebsund/oder Zustandsparameterkombination und kann z. B. durch Berechnung und Überprüfung der Berechnung basierend auf vorab ermittelten und gespeicherten Werten erfolgen. Hierfür kann z. B. ein formelmäßiger Zusammenhang zwischen der maximalen Traglast und den Zustandsparametern und/oder Betriebsparametern vorgegeben und als Berechnungsvorschrift hinterlegt sein.

Eine "erste Baugruppe" in obigem Sinne kann z.B. der Oberwagen incl. Ausleger und Gegengewicht sein; eine zweite Baugruppe kann z.B. Unterwagen mit Abstützträgern, Oberwagen und Oberwagendrehwinkel sein.

Somit wird die Ermittlung der Tragfähigkeit oder maximalen Traglast eines Krans nicht nur ausschließlich basierend auf vorab gespeicherten Werten vorgenommen, sondern vorab abgespeicherte Grenzkurven werden z. B. nur verwendet, sofern es sich um einfach abzuspeichernde Grenzkurven handelt, also z. B. zweidimensionale Grenzkurven oder dreidimensionale Grenzkurven, im Einzelfall auch eine oder mehrere höherdimensionale Grenzkurven und/oder zur Überprüfung einer Berechnung, z. B. für den Unterwagen. Jedoch wird vermieden, dass im Falle von zu vielen zu berücksichtigenden Parametern und/oder zu vielen möglichen Einzelzuständen eines oder mehrerer Parameter hochdimensionale oder sogar unendlich viele Grenzkurven abgespeichert werden müssten. Die erfindungsgemäße Verwendung von nur niedrigdimensionalen Grenzkurven ermöglicht eine einfache Teillösung des Problems der Bestimmung der Gesamttragfähigkeit eines Krans. Für diejenigen Funktionselemente oder Baugruppen, welche nur durch vieldimensionale Grenzkurven bezüglich der maximalen Traglast beschrieben werden können, wird eine Berechnung durchgeführt, welche beispielsweise auf einem oder mehreren vorgegebenen formelmäßigen Zusammenhängen oder Formeln beruht, um aus aktuell vorliegenden Parameterwerten oder Parameterkombinationen und unter Berücksichtigung der aus den abgespeicherten Grenzkurven ermittelten Teiltraglasten eine Gesamttraglast zu ermitteln, wobei wie schon beschrieben aus Sicherheitsgründen die geringste baugruppenspezifische maximale Traglast als maximale Traglast des Krans ermittelt wird. Die Baugruppe, welche in der vorliegenden Konfiguration die geringste Last tragen kann, bestimmt in diesem Fall die zulässige maximale Traglast des Krans.

Beispielsweise können vorberechnete zwei- oder dreidimensionale Grenzkurven oder maximale baugruppenbedingte oder baugruppenspezifische Traglasten für das Auslegersystem, und optional auch für den Wippzylinder, für die aktuelle Krankonfiguration bestimmenden Parameter aus einem Speicher ausgelesen werden und diese vorberechneten Grenzkurven oder maximalen baugruppenbedingten oder baugruppenspezifischen Traglasten an die Kransteuerung übergeben werden.

Anschließend kann, im Falle des Auslesens von Grenzkurven, durch die Kransteuerung z. B. auf Basis der Erkennung der aktuellen Konfiguration des Auslegersystems eine zugeordnete z. B. zweidimensionale Grenzkurve ausgewählt werden. Die Konfiguration des Auslegersystems kann z. B. erkannt werden durch die Eingabe eines entsprechenden Codes oder allgemein der entsprechenden Konfiguration z.B. durch einen Benutzer, und/oder kann auch vollständig oder ergänzend durch einen oder mehrere Sensoren erkannt werden. Beispielsweise können an einem Ausleger Sensoren angeordnet sein, welche der Kransteuerung die aktuelle Länge des Auslegers übermitteln. Parallel dazu oder zeitlich davor oder danach können auf Basis der Erkennung der Komponenten des Oberwagens, also z. B. auch unter Berücksichtigung des Gegengewichts, die relevanten Zustands- und/oder Betriebsparameter ermittelt werden und basierend darauf die der Konfiguration bzw. den Parametern zugeordnete z.B. zweidimensionale Grenzkurve für den Oberwagen ermittelt oder aus einem Speicher ausgelesen werden. Die Erkennung der Komponenten oder konkreten Konfiguration kann wie oben beschrieben durch eine Eingabe z. B. durch einen Benutzer und/oder durch einen Sensor erfolgen, welcher mit der Kransteuerung oder Recheneinheit verbunden ist. Die Eingabe von Parametern kann sich auch auf gewünschte (spätere) Zustände des Krans beziehen, welcher momentan eine davon abweichende Konfiguration aufweisen kann. Auch in diesem Fall wird von konkret vorliegenden (z.B. eingegebenen) Parametern gesprochen.

Die Ermittlung der maximalen Tragfähigkeit des Unterwagens kann auf der Basis der Erkennung der Konfiguration oder von Komponenten, insbesondere der Konfiguration oder Geometrie der Stützbasis des Unterwagens erfolgen. Die zur Beschreibung der Konfiguration des Unterwagens verwendeten Betriebs- und/oder Zustandsparameter können z. B. eingegeben und/oder durch Sensoren ermittelt werden. Da die Zustandsparameter des Unterwagens, also z.B. vier stufenlos und unabhängig voneinander aus- und einfahrbare Stützträger, im beschriebenen Beispiel nicht nur diskret vorgegebene Werte annehmen können, sondern z. B. aufgrund einer stufenlosen Verstellbarkeit theoretisch unendlich viele Werte zwischen zwei vorgegebenen Stellungen (z. B. vollständig eingefahrener Stützträger und vollständig ausgefahrener Stützträger) annehmen können und da mehrere, z. B. vier, Stützträger vorhanden sind, ergibt sich theoretisch eine unendliche Vielzahl möglicher Konfigurationen. Erfindungsgemäß wird anhand eines z. B. vorgegebenen formelmäßigen Zusammenhangs die maximale Traglast des Unterwagens nur für die aktuelle Konfiguration berechnet, wobei es anders als bei einer Vorabberechnung und Hinterlegung in einem Speicher nicht erforderlich ist, alle möglichen Einzelzustände oder mögliche Kombinationen unterschiedlicher Einzelzustände zu berechnen und abzuspeichern. Diese Berechnung kann an Hand vorab gespeicherter Werte überprüft werden.

Dabei kann die berechnete Grenzbelastung oder maximale Traglast optional auch unter Berücksichtigung der wie oben beschrieben ermittelten Grenzkurve oder Traglast für das System Oberwagen und Ausleger für einen konkret vorliegenden Drehwinkel zwischen Unterwagen und Oberwagen ermittelt werden. Optional erfolgt diese Berechnung für den gesamten Drehbereich zwischen Unterwagen und Oberwagen, also im Bereich von 0Grad bis 360Grad, wobei diese Berechnung vorab oder bei Bedarf, z.B. auch kontinuierlich erfolgen kann und somit eine vom Drehwinkel abhängige Traglastkurve vorgeben kann. Optional kann diese Berechnung auch in diskreten Schritten erfolgen und z. B. unterteilt in kontinuierlichen diskreten Schritten, wie z. B. 1 Grad-Schritten oder 5Grad-Schritten, ermitteln, wie die maximale Traglast für die jeweils berücksichtigten Drehstellungen ist.

Es kann somit eine maximale Traglast für eine beliebige Konfiguration der Abstützbasis und für beliebige Drehwinkel zwischen Ober- und Unterwagen berechnet werden und basierend auf einer Mehrzahl dieser Berechnungen kann z. B. eine Grenzkurve für den Kran angegeben werden, wobei basierend auf den Einzelberechnungen die maximale Traglast für unterschiedliche Drehwinkel des Oberwagens relativ zum Unterwagen angegeben werden kann. Der einzige variable Parameter dieser Grenzkurve ist dann der Drehwinkel, die Unterwagenkonfiguration wird dann als in dem konkreten Zustand konstant angenommen.

Damit kann die an sich bekannte Verwendung vorab gespeicherter Grenzkurven auf ein sinnvolles Maß dadurch reduziert werden, dass diese Grenzkurven nur für niederparametrige Funktionselemente oder Baugruppen vorab berechnet und abgespeichert werden, wodurch es nicht mehr erforderlich ist, eine hohe Anzahl von Grenzkurven für alle möglichen Konfigurationen des Gesamtsystems vorab zu ermitteln und abzuspeichern. Im Falle von Funktionselementen oder Baugruppen, wie im beschriebenen Beispiel im Falle einer variablen Abstützbasis, werden erfindungsgemäß nicht eine Vielzahl von Grenzkurven zur Berücksichtigung der unterschiedlichen Einzelstellungen oder Kombinationen vorab berechnet und abgespeichert, sondern stattdessen wird eine Berechnung vorgenommen und diese Berechnung wird an Hand (vergleichsweise weniger) abgespeicherter Datensätze überprüft. Das Ergebnis kann z. B. unter ergänzender Berücksichtigung der mittels aus vorab ermittelten und abgespeicherten Grenzkurven ermittelten maximalen Traglast der anderen Kran-Funktionselemente oder Baugruppen, zur Ermittlung der Gesamttraglast verwendet werden. Dabei kann auch eine neue Grenzkurve berechnet werden, welche z. B. als einzigen Parameter den Drehwinkel zwischen Oberwagen und Unterwagen aufweist. Hierdurch ist es möglich, einerseits den Aufwand bei der Vorabbestimmung von Grenzkurven sowie den zur Hinterlegung erforderlichen Speicher zu reduzieren und andererseits die Gesamttraglastfähigkeit eines Krans für ein Gesamtsystem mit theoretisch unendlich vielen Zuständen oder Kombinationsmöglichkeiten einfach zu ermitteln und somit die Gesamttragfähigkeit des Kranes möglichst optimal auszunutzen.

Der Drehwinkel zwischen Unterwagen und Oberwagen kann z. B. mittels eines Sensors erkannt und an die Kransteuerung oder eine Traglastberechnungseinheit übermittelt werden, um für die jeweils aktuell vorliegende Konfiguration die maximal zulässige Traglast zu bestimmen.

Ergänzend zur Ermittlung der maximalen Traglast kann eine oder können auch mehrere zulässige maximale Arbeitsgeschwindigkeiten ermittelt oder berechnet werden, wobei folgende Aspekte hierzu berücksichtigt werden können:

    a) aktuelle Ausnutzung der Grenztragfähigkeit
    b) Lage der aktuellen zweidimensionalen Grenzkurve in der dreidimensionalen Grenzkurve
    c) Aktuell gewählter Arbeitsmodus
    Zuverlässigkeit der Sensordaten oder Benutzereingaben (Validierung)

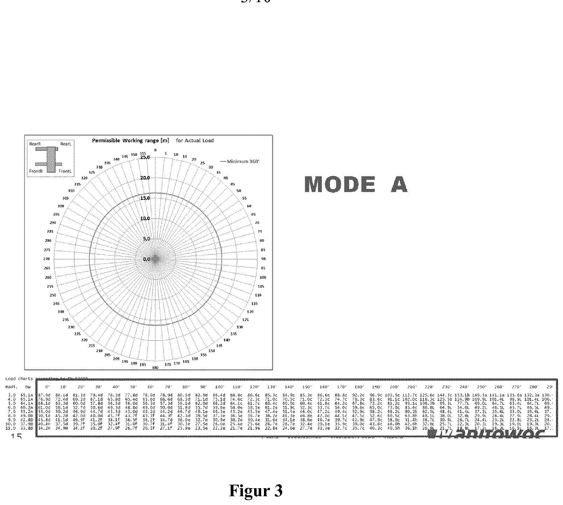

Basierend auf obiger Ermittlung der Tragfähigkeit können verschiedene Arbeitsmodi bestimmt und einem Benutzer angeboten werden, wie in den Figuren 3 bis 6 beispielhaft dargestellt.

Figur 3 zeigt den Arbeitsmodus "360Grad - Tabelle". Dabei wird die minimale Tragfähigkeit aus dem gesamten Drehbereich zu Grunde gelegt. Somit ist beim Drehen nicht zu erwarten, dass ein kritischer Zustand entsteht. Die Arbeitsgeschwindigkeiten müssen nicht gesondert begrenzt werden.

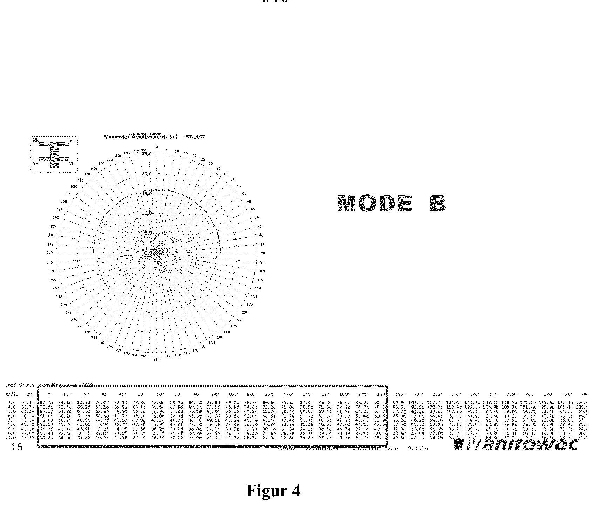

Figur 4 zeigt den Arbeitsmodus "Eingeschränkter Arbeitsbereich". Der Arbeitsbereich wird vorab auf einen bestimmten Bereich (z. B. 180Grad nach hinten) beschränkt. Es wird die minimale Tragfähigkeit für den gewählten Arbeitsbereich zu Grunde gelegt. Die Abschaltgrenzen für das Drehen sind vorab bekannt und unabhängig von Traglastausnutzungen. Bei Annäherungen an die Arbeitsbereichsgrenze wird rechtzeitig die Geschwindigkeit reduziert und die Dreh-Bewegung vor oder an der Grenze gestoppt.

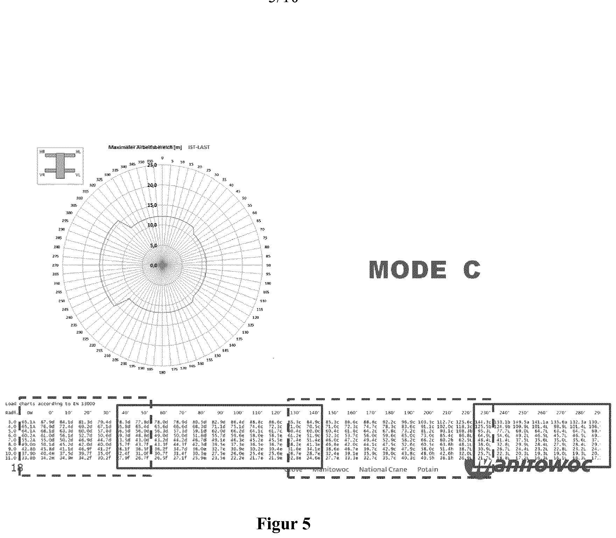

Figur 5 zeigt den Arbeitsmodus "Sektorenbezogene Tragfähigkeiten". Der Arbeitsbereich wird vorab in geeignete Sektoren (z. B. 180Grad links/rechts oder 90Grad über die Stützen) aufgeteilt. Es wird die minimale Tragfähigkeit für die einzelnen Sektoren ermittelt und zu Grunde gelegt. Die Abschaltgrenzen für das Drehen sind abhängig von Traglastausnutzungen und müssen dynamisch ermittelt werden. Eine Änderung der zulässigen Traglast kann jedoch nur an den Sektorengrenzen zum Tragen kommen. Somit muss nur bei Annäherung an die Sektorengrenzen die Geschwindigkeit gesondert reduziert werden und gegebenenfalls die Bewegung vor oder an der Grenze gestoppt werden.

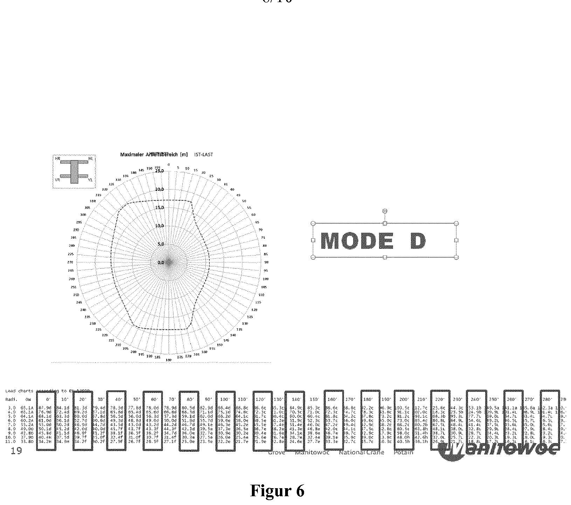

Figur 6 zeigt den Arbeitsmodus "Optimierte Tragfähigkeit". Der Arbeitsbereich wird vorab in finite Sektoren (z. B. 5Grad oder 10Grad) aufgeteilt. Es wird jeweils die für diesen Sektor optimale oder maximale Tragfähigkeit zu Grunde gelegt. Die Abschaltgrenzen für das Drehen sind abhängig von Traglastausnutzungen und werden dynamisch ermittelt. Eine Änderung der zulässigen Traglast kann jederzeit zum Tragen kommen. Somit wird die Geschwindigkeit ständig überwacht und kann in Abhängigkeit von den zulässigen Traglasten sowie der aktuellen Ausnutzung der Tragfähigkeit gesondert angepasst sowie gegebenenfalls reduziert werden. Im Maximalfall kann die Bewegung rechtzeitig gestoppt werden.

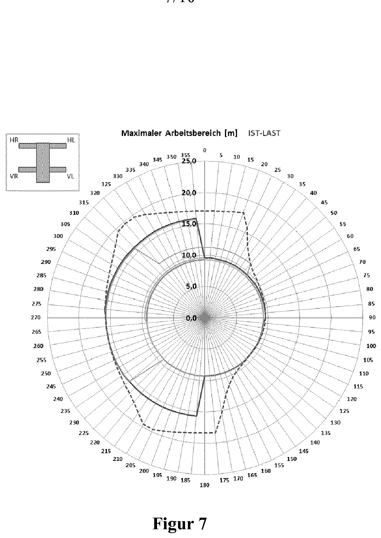

Somit steht jederzeit eine dreidimensionale Tragfähigkeitstabelle zur Verfügung, und der Bediener oder Operator kann in Abhängigkeit von seiner Arbeitsaufgabe einen entsprechenden Modus wählen, wie beispielsweise in Figur 7 dargestellt. Die alternativen Arbeitsmodi können beispielsweise sein:

- Ausnutzung der maximalen Tragfähigkeit/Arbeitsradien und Akzeptanz der reduzierten Geschwindigkeiten bzw. Arbeitsbereichs-/Drehwinkelbeschränkungen
- "barrierefreies" Arbeiten mit höheren Geschwindigkeiten und Akzeptanz von reduzierten Tragfähigkeiten
- eine Kombination dieser beiden Möglichkeiten.

Gemäß einem beispielhaften Ablauf werden folgende Schritte durchgeführt:

Schritt 1: Auswertung der Sensorwerte Auslegerkonfiguration und Auswahl der entsprechenden Auslegerfestigkeit.

Schritt 2: Auswertung der Sensorwerte Baugruppe "Oberwagen" Konfiguration und Berechnung der Festigkeit der Baugruppe.

Schritt 3: Auswertung der Sensorwerte Abstützung und Berechnung der 360Grad-Kurve.

Schritt 4: Auswertung der Sensorwerte Drehwinkel und Ausladung sowie Ermittlung der zulässigen Traglast für den aktuellen Drehwinkel.

Schritt 5: Auswertung der Sensorwerte Last und Ausladung sowie Ermittlung der aktuell vorhandenen Last.

Schritt 6: Vergleich von Soll-Ist sowie Regelung der maximal zulässigen Geschwindigkeiten einschließlich Abschaltung von gefährdenden Bewegungen.

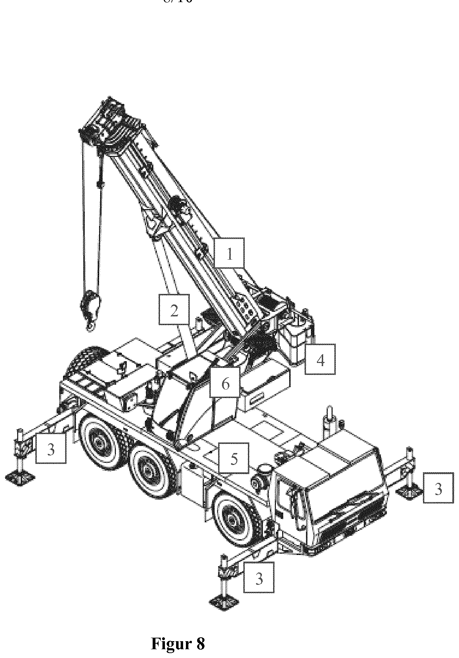

Figur 8 zeigt einen Kran, welcher das oben beschriebene Verfahren ausführen kann. Dabei weist ein Kran einen teleskopierbaren Ausleger 1 auf, dessen Anstellwinkel mittels des Wippzylinders 2 eingestellt werden kann. An der Vorderseite und Rückseite des fahrbaren Krans sind jeweils seitlich rechts und links Stützträger 3 vorgesehen, welche zwischen einer vollständig eingeschobenen Position und vollständig ausgefahrenen Position jede beliebige Zwischenposition einnehmen können. Am Oberwagen 6, welcher relativ zum Unterwagen 5 um 360Grad gedreht werden kann, ist ein Gegengewicht 4 vorgesehen, welches einen von mehreren vorgegebenen diskreten Werten aus unterschiedlichen Gegengewichten annehmen kann.

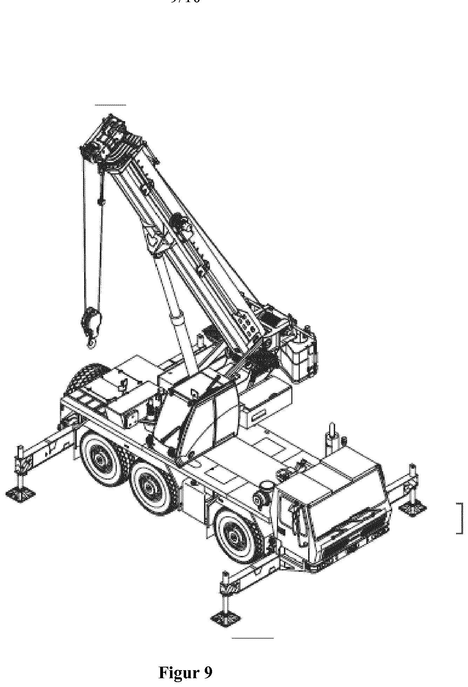

Figur 9 zeigt den in Figur 8 dargestellten Kran mit der Kennzeichnung von Sensoren, welche einzeln oder in Kombination zur Bestimmung der Konfiguration oder Zustandsparameter oder Betriebsparameter des Kranes verwendet werden können. An den mit 7 gekennzeichneten Positionen können ein oder mehrere Sensoren zum Bestimmen des Auslegerwinkels vorgesehen sein. An der mit 8 gekennzeichneten Position kann ein Sensor zur Bestimmung der Auslegerlänge oder Auslegerteleskopierung vorgesehen sein. 9 bezeichnet den Bereich, in welchem ein Sensor zur Ermittlung des Wippzylinderdruckes und somit des Betriebszustandes oder der Wippzylinderkonfiguration vorgesehen sein kann. An den mit 10 gekennzeichneten Stellen können ein oder mehrere Sensoren zur Ermittlung der Stützbreite und an den mit 11 gekennzeichneten Stellen können Sensoren zur Ermittlung des Stützdruckes vorgesehen sein. 12 bezeichnet einen Sensor zur Bestimmung des Gegengewichts, 13 einen Sensor zur Bestimmung der Seilkraft und 14 einen Sensor zur Erkennung von Zusatzausrüstungen (z.B. einer Schlauchtrommel zur Ölversorgung des Spitzenzylinders, eine am Ausleger gelagerte Spitze). An der mit 15 gekennzeichneten Stelle kann optional ein Sensor z. B. zum Erkennen der tatsächlichen Last am Ausleger vorgesehen sein.

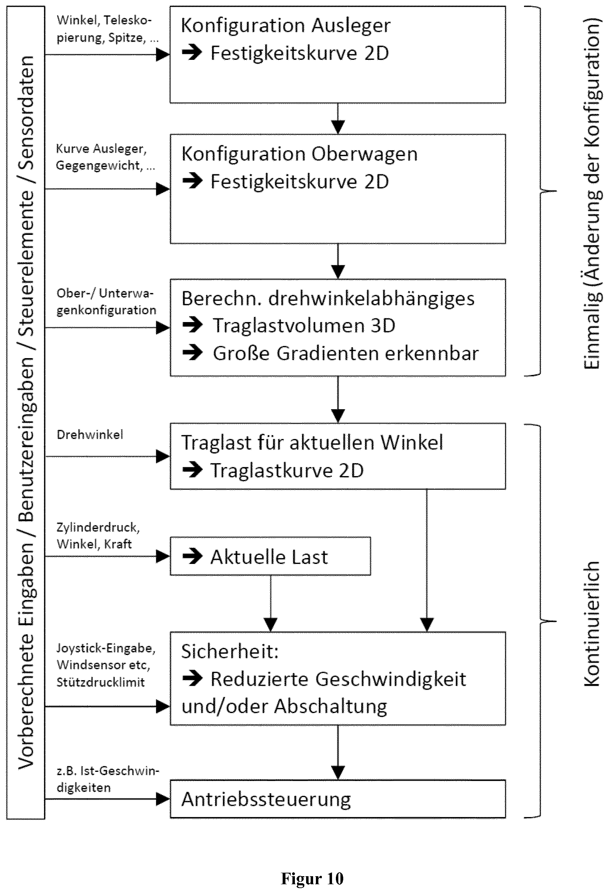

Figur 10 zeigt ein Ablaufdiagramm zur Berechnung eines Traglastvolumens. Wie in den in Figur 10 oben dargestellten Schritten gezeigt, wird bei einer Änderung der Konfiguration einmalig zunächst die Konfiguration festgelegt, siehe die oberen zwei Schritte. Beispielsweise wird die Konfiguration des Auslegers und die Konfiguration des Oberwagens bestimmt und jeweils eine Festigkeitskurve oder Traglastkurve ermittelt, welche zwei- oder mehrdimensional sein kann. Zustandsparameter des Auslegers sind wie beispielhaft angegeben Winkel, Teleskopierung und Spitze (keine abschließende Aufzählung). Zustandsparameter des Oberwagens sind beispielsweise die Kurve des Auslegers, das aktuelle Gegengewicht und der Zustand des Hubwerks (ebenfalls keine abschließende Aufzählung). Die Unterwagenkonfiguration kann aufgrund der variablen Stützbreite der Abstützungen theoretisch unendlich viele Zustände annehmen, wobei für den konkret vorliegenden Zustand, welcher beispielsweise automatisch anhand der an den Stützträgern vorgesehenen Sensoren zur Bestimmung des jeweiligen Ausschubzustandes ermittelt wird, die Tragfähigkeit berechnet wird. In Kombination mit den aus abgespeicherten Werten ermittelten Festigkeitskurven des Auslegers und des Oberwagens kann eine vom Drehwinkel abhängige maximale Tragfähigkeit berechnet werden, sodass z. B. ein dreidimensionales Traglastvolumen erstellt werden kann. Hierbei können auch große Gradienten erkannt werden. Gradienten können in diesem Zusammenhang z.B. angeben, wie stark sich die Traglast durch Veränderung von Parametern verändert. Diese sind für einen sicheren Betrieb sehr wichtig und können auch gesondert bewertet werden. Bei bestimmten Konfigurationen (z.B. alle Abstützträger eingefahren, kann es sein, dass bei einem gegebenen Oberwagendrehwinkel z.B. 80Grad eine Traglast von 15t zulässig ist. Es kann nun sein, dass bei einem Drehwinkel von 75Grad aufgrund von Standsicherheit die zulässige Last auf 5 t zusammenbricht Der Gradient "Traglaständerung pro Winkeländerung" ist hier also 10/5 = 2.0t/Grad. Aus dynamischen und steuerungstechnischen Gründen ist aber ein gewisser "Vorlaufwinkel" erforderlich, der für das gezielte Abbremsen des Oberwagens zur Verfügung stehen muss. Sei dieser Vorlaufwinkel 10Grad. So müssten also frühestens schon bei 85Grad Maßnahmen eingeleitet werden, dass der Punkt 5t bei 75Grad auch beim scharfen Bremsen der Oberwagendrehung nicht überschritten wird.

Nachdem diese Ermittlungen und Berechnungen der maximalen Traglast für eine vorliegende Konfiguration oder nach einer Änderung der Konfiguration einmalig durchgeführt wurden, können die nachfolgenden Schritte im Betrieb kontinuierlich oder fortlaufend durchgeführt werden. Es kann für den aktuellen Drehwinkel zwischen Ober- und Unterwagen, welcher beispielsweise mittels eines Drehwinkelsensors ermittelt wird, die jeweils zulässige maximale Traglast bestimmt werden. Dies führt dann zur 2D-Traglastkurve Last-über-Radius, welche die Traglast für z.B. verschiedene Wippwinkel (Radien) darstellt.

Unter Berücksichtigung einer gemessenen oder eingegebenen aktuellen Last, welche z. B. anhand der Parameter Zylinderdruck, Winkel und/oder Kraft ermittelt wird, kann eine Berechnung erfolgen, um einem Operator oder Bediener anzuzeigen, dass die Geschwindigkeit reduziert werden oder der Kran in einen Sicherheitsmodus abgeschaltet werden soll. Diese Informationen können auch automatisch in die angegebenen Aktionen umgesetzt werden. Dabei kann z. B. der Ausgabewert eines Windsensors und/oder ein Stützdrucklimit und/oder eine Benutzereingabe berücksichtigt werden.

Diese Information kann an eine Antriebssteuerung zum Betrieb des Kranes weitergegeben werden.

**Patentansprüche**

1.  Verfahren zum Ermitteln der Tragfähigkeit eines Krans in einer bestimmten Konfiguration, wobei

   a) der Kran mindestens zwei Baugruppen (1-6) aufweist,
   b) der Kran eine Mehrzahl von Konfigurationsmöglichkeiten aufweist, die durch Parameter der Baugruppen (1-6) bestimmt sind,
   c) die baugruppenbedingte Tragfähigkeit des Krans von mindestens einem Parameter der jeweiligen Baugruppe (1-6) abhängt,
   d) mindestens eine erste Baugruppe (1, 2, 4, 6) durch eine geringste Zahl an Parametern spezifiziert wird und/oder eine geringste Variationsmöglichkeit des oder der Parameter aufweist und/oder einen geringsten Gradienten der Veränderung der maximalen Traglast bei Veränderung eines oder mehrerer Parameter aufweist, und
   e) mindestens eine zweite Baugruppe (3, 5) durch eine größte Zahl an Parametern spezifiziert wird und/oder eine größte Variationsmöglichkeit des oder der Parameter aufweist und/oder eine größte Variationsmöglichkeit des oder der Parameter aufweist und/oder einen größten Gradienten der Veränderung der maximalen Traglast bei Veränderung eines oder mehrerer Parameter aufweist,
   f) die konkret vorliegenden Werte der Parameter der mindestens einen ersten Baugruppe (1, 2, 4, 6) und der mindestens einen zweiten Baugruppe (3, 5) in der bestimmten Konfiguration des Krans ermittelt werden,

g) die baugruppenbedingte Tragfähigkeit der mindestens einen ersten Baugruppe (1, 2, 4, 6) in Abhängigkeit von mindestens einem der Parameter der mindestens einen ersten Baugruppe (1, 2, 4, 6) berechnet wird und/oder vorbestimmt und abgespeichert ist und für den oder die konkret vorliegenden Wert(e) des oder der Parameter aus einem Speicher ausgelesen wird;

h) die baugruppenbedingte Tragfähigkeit der mindestens einen zweiten Baugruppe (3, 5) aus den konkret vorliegenden Werten des oder der Parameter der zweiten Baugruppe (3, 5) ermittelt oder berechnet wird, wobei das Ermittlungs- oder Berechnungsergebnis basierend auf einem oder mehreren gespeicherten Werten überprüft wird, wobei zur Überprüfung einer Berechnung diejenigen gespeicherten Parametersätze herangezogen werden, welche mit den konkreten Parameterwerten übereinstimmen und/oder für jeweils einen Parameter eine geringste Abweichung nach oben und/oder nach unten aufweisen; und

i) basierend auf den so ermittelten baugruppenbedingten Tragfähigkeiten der mindestens einen ersten Baugruppe (1, 2, 4, 6) und der mindestens einen zweiten Baugruppe (3, 5) die Tragfähigkeit des Krans bestimmt wird.

2. Verfahren zum Ermitteln der Tragfähigkeit eines Krans nach Anspruch 1, wobei eine erste Baugruppe eine Baugruppe ist, welche nur von einem einzigen Parameter abhängig ist.

3. Verfahren zum Ermitteln der Tragfähigkeit eines Krans nach Anspruch 1, wobei eine erste Baugruppe eine Baugruppe ist, welche von höchstens zwei oder von höchstens drei Parametern abhängig ist.

4. Verfahren zum Ermitteln der Tragfähigkeit eines Krans nach einem der vorhergehenden Ansprüche, wobei eine zweite Baugruppe eine Baugruppe ist, welche von vier oder mehr Parametern abhängig ist und/oder ein Unterwagen mit unabhängig voneinander ausfahrbaren Stützelementen (3) ist.

5. Verfahren zum Ermitteln der Tragfähigkeit eines Krans nach einem der vorhergehenden Ansprüche, wobei eine zweite Baugruppe eine Baugruppe ist, welche von mindestens drei Parametern oder von mindestens vier Parametern abhängig ist, wobei jeder Parameter der Baugruppe unabhängig von anderen Parametern der Baugruppe diskret oder kontinuierlich verändert werden kann.

6. Verfahren zum Ermitteln der Tragfähigkeit eines Krans nach einem der vorhergehenden Ansprüche, wobei Parameter einer Baugruppe Zustandsparameter zur Beschreibung des Zustands oder zur Festlegung der Konfiguration oder Geometrie der Baugruppe und/oder Betriebsparameter zur Beschreibung des Betriebszustandes sind.

7. Verfahren zum Ermitteln der Tragfähigkeit eines Krans nach einem der vorhergehenden Ansprüche, wobei mindestens zwei der folgenden Baugruppen zur Durchführung des Verfahrens verwendet werden: Ausleger (1), Wippzylinder (2), Stützträger (3), Gegengewicht (4), Unterwagen (5), Oberwagen (6).

8. Verfahren zum Ermitteln der Tragfähigkeit eines Krans nach einem der vorhergehenden Ansprüche, wobei:

- die Baugruppe Ausleger (1) durch die Parameter Auslegerlänge und/oder Auslegerwinkel bestimmt wird, und/oder
- die Baugruppe Wippzylinder (2) durch den Parameter **Ausfahrlänge oder wahlweise Auslegerwinkel aus der Kinematik** bestimmt wird, und/oder
- die Baugruppe Unterwagen (5) aus mindestens vier Einzelstützträgern oder Einzelstützen besteht und durch den für jeden einzelnen Stützträger oder jede Einzelstütze (3) unabhängig voneinander festlegbaren Parameter Ausfahrlänge und/oder den Parameter Stützkraft bestimmt wird, und/oder
- die Baugruppe Gegengewicht (4) durch den Parameter Gewichtsgröße und Schwerpunktlage bestimmt wird, und/oder
- die Baugruppe Kran durch die Parameter der Baugruppen Ausleger (1), Wippzylinder (2), Stützträger (3) und Gegengewicht (4) und Oberwagen bestimmt wird.

9. Verfahren zum Ermitteln der Tragfähigkeit eines Krans nach einem der vorhergehenden Ansprüche, wobei der konkret vorliegende Wert des oder der Parameter einer Baugruppe durch einen oder mehrere Sensoren (7-13) und/oder durch manuelle Eingabe ermittelt wird.

10. Verfahren nach einem der vorhergehenden Ansprüche, wobei basierend auf einer Gradienten-Betrachtung, ermittelt anhand der gespeicherten Werte, überprüft wird, ob ein berechneter Traglastwert plausibel ist.

**11.** Verfahren zur Überwachung der Kransicherheit eines Krans, wobei die Tragfähigkeit eines Krans mit einem Verfahren nach einem der vorhergehenden Ansprüche ermittelt und auf Einhaltung überwacht wird.

**12.** Kran mit Mitteln zur Durchführung eines Verfahrens nach einem der vorhergehenden Ansprüche.

**13.** Kran nach Anspruch 12, ausgestattet mit Mitteln zur Darstellung aller Zustandsgrössen, die anhand des Verfahrens nach einem der Ansprüche 1 bis 11 ermittelt werden.

**Claims**

**1.** Method for determining the load capacity of a crane in a specific configuration, wherein

a) the crane has at least two assemblies (1-6),
b) the crane has a plurality of configuration options, which are determined by parameters of the assemblies (1-6),
c) the load capacity, contingent on the assemblies, of the crane depends on at least one parameter of the respective assembly (1-6),
d) at least one first assembly (1, 2, 4, 6) is specified by a smallest number of parameters and/or has a smallest variation possibility of the parameter or parameters and/or has a smallest gradient of the change of the maximum bearing load when changing one or more parameters, and
e) at least one second assembly (3, 5) is specified by a largest number of parameters and/or has a largest variation possibility of the parameter or parameters and/or has a largest variation possibility of the parameter or parameters and/or has a largest gradient of the change of the maximum bearing load when changing one or more parameters,
f) the concretely present values of the parameters of the at least one first assembly (1, 2, 4, 6) and of the at least one second assembly (3, 5) in the specific configuration of the crane are determined,
g) the load capacity, contingent on the assemblies, of the at least one first assembly (1, 2, 4, 6) is calculated and/or predetermined depending on at least one of the parameters of the at least one first assembly (1, 2, 4, 6) and stored and read out from a memory for the concretely present value(s) of the parameter or parameters;
h) the load capacity, contingent on the assemblies, of the at least one second assembly (3, 5) is ascertained or calculated from the concretely present values of the parameter or parameters of the second assembly (3, 5), wherein the ascertaining or calculating result is checked based on one or more stored values, wherein the stored parameter sets are used to check a calculation, said parameter sets agreeing with the concrete parameter values and/or having a smallest deviation above and/or below for each parameter; and
i) the load capacity of the crane is determined based on the bearing loads of the at least one first assembly (1, 2, 4, 6) and the at least one second assembly (3, 5), said bearing loads being determined in this way and contingent on the assembly.

**2.** Method for determining the load capacity of a crane according to claim 1, wherein a first assembly is an assembly which is only dependent on a single parameter.

**3.** Method for determining the load capacity of a crane according to claim 1, wherein a first assembly is an assembly which is dependent on at most two or at most three parameters.

**4.** Method for determining the load capacity of a crane according to one of the preceding claims, wherein a second assembly is an assembly which is dependent on four or more parameters and/or is an undercarriage having support elements (3) that can be extended independently of one another.

**5.** Method for determining the load capacity of a crane according to one of the preceding claims, wherein a second assembly is an assembly which is dependent on at least three parameters or on at least four parameters, wherein each parameter of the assembly can be discretely or continuously changed independently of other parameters of the assembly.

**6.** Method for determining the load capacity of a crane according to one of the preceding claims, wherein parameters of an assembly are state parameters for describing the state or for setting the configuration or geometry of the assembly and/or operating parameters for describing the operating state.

**7.** Method for determining the load capacity of a crane according to one of the preceding claims, wherein at least two of the following assemblies are used to carry out the method: cantilever (1), derricking cylinder (2), supporting beam (3), counterweight (4), undercarriage (5), superstructure (6).

8. Method for determining the load capacity of a crane according to one of the preceding claims, wherein:

- the cantilever (1) assembly is determined by the parameters of cantilever length and/or cantilever angle, and/or
- the derricking cylinder (2) assembly is determined by the parameters of **extension length or, selectively, cantilever angle from the cinematic system**, and/or
- the undercarriage (5) assembly consists of four individual supporting beams or individual supports and is determined by the parameter of extension length and/or the parameter of support force that can be set for each individual supporting beam or each individual support (3) independently of one another, and/or
- the counterweight (4) assembly is determined by the parameters of weight size and centre of gravity, and/or
- the crane assembly is determined by the parameters of the assemblies of cantilever (1), derricking cylinder (2), supporting beam (3) and counterweight (4) and superstructure.

9. Method for determining the load capacity of a crane according to one of the preceding claims, wherein the concretely present value of the parameter or parameters of an assembly is determined by one or more sensors (7-13) and/or by manual input.

10. Method according to one of the preceding claims, wherein, based on a gradient consideration, determined by means of the stored values, it is checked whether a calculated bearing load value is plausible.

11. Method for monitoring the crane safety of a crane, wherein the load capacity of a crane is determined by a method according to one of the preceding claims and is monitored for adherence.

12. Crane having means for carrying out a method according to one of the preceding claims.

13. Crane according to claim 12, equipped with means for depicting all of the state parameters, which are determined by means of the method according to one of claims 1 to 11.

**Revendications**

1. Procédé de détermination de la capacité portante d'une grue dans une configuration définie, dans lequel

a) la grue présente au moins deux composants (1 à 6),
b) la grue présente une multiplicité de possibilités de configurations qui sont déterminées par des paramètres des composants (1 à 6),
c) la capacité portante de la grue liée aux composants dépend d'au moins un paramètre du composant respectif (1 à 6),
d) au moins un premier composant (1, 2, 4, 6) est spécifié par un nombre restreint de paramètres, et/ou présente une possibilité de variation restreinte du ou des paramètres, et/ou présente un gradient restreint de modification de la charge portante maximale lors d'une modification d'un ou de plusieurs paramètres, et
e) au moins un deuxième composant (3, 5) est spécifié par un nombre plus grand de paramètres, et/ou présente une possibilité de variation plus grande du ou des paramètres, et/ou présente une possibilité de variation plus grande du ou des paramètres, et/ou présente un gradient de la modification de la charge portante maximale plus grand lors d'une modification d'un ou de plusieurs paramètres,
f) les valeurs concrètement présentes des paramètres de l'au moins un premier composant (1, 2, 4, 6) ou de l'au moins un deuxième composant (3, 5) sont déterminées dans une configuration définie de la grue,
g) la capacité portante reliée au composant de l'au moins un premier composant (1, 2, 4, 6) est calculée, et/ou est prédéterminée, en fonction d'au moins un des paramètres de l'au moins un premier composant (1, 2, 4, 6), et est stockée et est lue pour la ou les valeurs concrètement présentes du ou des paramètres à partir d'une mémoire ;
h) la capacité portante reliée au composant de l'au moins un deuxième composant (3, 5) est déterminée, ou est calculée, à partir des valeurs concrètement présentes du ou des paramètres du deuxième composant (3, 5), où le résultat de la détermination ou du calcul est vérifié en se basant sur une ou plusieurs valeurs stockées, où, pour la vérification, on fait appel à un calcul des ensembles de paramètres stockés en question, lesquels sont en accord avec les valeurs de paramètres concrètes, et/ou présentent une variation infime vers le haut et/ou vers le bas pour respectivement un paramètre ; et

i) en se basant sur les capacités portantes reliées aux composants déterminées de l'au moins un premier composant (1, 2, 4, 6) et de l'au moins un deuxième composant (3, 5), la capacité portante de la grue peut être déterminée.

2. Procédé de détermination de la capacité portante d'une grue selon la revendication 1, dans lequel un premier composant est un composant, lequel ne dépend que d'un seul paramètre.

3. Procédé de détermination de la capacité portante d'une grue selon la revendication 1, dans lequel un premier composant est un composant, lequel dépend au plus de deux ou au plus de trois paramètres.

4. Procédé de détermination de la capacité portante d'une grue selon l'une des revendications précédentes, dans lequel un deuxième composant est un composant, lequel dépend de quatre ou de plus de paramètres, et/ou est un châssis inférieur avec des éléments supports (3) pouvant être déployés indépendamment les uns des autres.

5. Procédé de détermination de la capacité portante d'une grue selon l'une des revendications précédentes, dans lequel un deuxième composant est un composant, lequel dépend d'au moins trois paramètres ou d'au moins quatre paramètres, où chaque paramètre du composant peut être modifié indépendamment des autres paramètres du composant de manière discrète ou continue.

6. Procédé de détermination de la capacité portante d'une grue selon l'une des revendications précédentes, dans lequel des paramètres d'un composant sont des paramètres d'état pour la description de l'état ou pour la fixation de la configuration, ou de la géométrie du composant, et/ou du paramètre de fonctionnement, pour la description de l'état de fonctionnement.

7. Procédé de détermination de la capacité portante d'une grue selon l'une des revendications précédentes, dans lequel au moins deux des composants suivants sont employés pour l'exécution du procédé : flèche (1), vérin de basculement (2), support d'appui (3), contrepoids (4), châssis inférieur (5), châssis supérieur (6).

8. Procédé de détermination de la capacité portante d'une grue selon l'une des revendications précédentes, dans lequel :

   - le composant flèche (1) est déterminée par les paramètres longueur de flèche et/ou angle de la flèche, et/ou
   - le composant vérin de basculement (2) est déterminé, au choix, par le paramètre **longueur d'extension ou angle de la flèche à partir de la cinématique**, et/ou
   - le composant châssis inférieur (5) est constitué d'au moins quatre supports d'appui individuels ou d'appuis individuels et est déterminé par le paramètre longueur d'extension et/ou le paramètre force d'appui pour chaque support d'appui individuel ou chaque appui individuel (3) de manière indépendante les uns des autres, et/ou
   - le composant contrepoids (4) est déterminé par le paramètre grandeur de poids et position du centre de gravité, et/ou
   - le composant grue est déterminé par les paramètres des composants flèche (1), vérin de basculement (2), support d'appui (3) et contrepoids (4), et châssis supérieur.

9. Procédé de détermination de la capacité portante d'une grue selon l'une des revendications précédentes, dans lequel la valeur concrètement présente du ou des paramètres d'un composant est déterminée par un ou plusieurs capteurs (7 à 13) et/ou par une saisie manuelle.

10. Procédé selon l'une des revendications précédentes, dans lequel, en se basant sur la considération d'un gradient déterminé à l'aide des valeurs stockées, on vérifie si la valeur de charge portante calculée est plausible.

11. Procédé de surveillance de la sécurité de grue d'une grue, dans lequel la capacité portante d'une grue est déterminée avec un procédé selon l'une des revendications précédentes et sa conformité est surveillée.

12. Grue dotée de moyens pour l'exécution d'un procédé selon l'une des revendications précédentes.

13. Grue selon la revendication 12, équipée de moyens pour la représentation de toutes les grandeurs d'état qui sont déterminées à l'aide du procédé selon l'une des revendications 1 à 11.

1/10

| Radi. | Ausl. : |
|-------|---------|
| -m- | -t- |
| 6.0 | 60.2 : |
| 7.0 | 55.2 : |
| 8.0 | 50.7 |
| 9.0 | 46.8 |
| 10.0 | 43.3 |
| 11.0 | 40.3 |
| 12.0 | 37.2 |
| 13.0 | 34.9 |
| 14.0 | 32.5 |
| 15.0 | 30.7 |
| 16.0 | 28.8 |
| 18.0 | 25.8 |
| 20.0 | 23.2 |
| 22.0 | 21.2 |
| 24.0 | 19.4 |
| 25.7 | 18.3 |

**Figur 1**

2/16

```
Radi.    OW

   3.0   65.1/
   4.0   65.1/
   5.0   64.1/
   6.0   60.2/
   7.0   55.2/
   8.0   49.0[
   9.0   42.8[
  10.0   37.9[
  11.0   33.8[
  12.0   30.5[
  13.0   27.6[
  14.0   25.1[
  15.0   22.9[
  16.0   21.0[
  18.0   17.9[
  20.0   15.4[
  22.0   13.3[
  24.0   11.7[
```

**Figur 2**

**Figur 3**

**Figur 4**

MODE C

Figur 5

**Figur 6**

**Figur 7**

**Figur 8**

**Figur 9**

**Figur 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2674384 A1
- WO 2015162096 A1
- DE 102015006992 A1
- EP 1748021 A